(19) **Europäisches Patentamt / European Patent Office / Office européen des brevets**

(11) **EP 1 816 819 A2**

(12) **EUROPEAN PATENT APPLICATION**

(43) Date of publication:
**08.08.2007 Bulletin 2007/32**

(51) Int Cl.:
**H04L 27/26** *(2006.01)*

(21) Application number: **07101779.2**

(22) Date of filing: **06.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.02.2006 KR 20060010959**

(71) Applicants:
• **Samsung Electronics Co., Ltd.**
  **Suwon-si, Gyeonggi-Do (KR)**
• **Korea Advanced Institute of Science and Technology**
  **305-701 Daejeon (KR)**

(72) Inventors:
• **Cho, Myeon-Kyun**
  **Gyeonggi-do (KR)**

• **Lee, Jong-Hyeuk**
  **Gyeonggi-do (KR)**
• **Nam, Seung-Hoon**
  **Seoul (KR)**
• **Kim, Hyung-Myung**
  **Deajeon (KR)**
• **Kang, Tae-Sung**
  **Seoul (KR)**
• **Ahn, Woo-Geun**
  **Gyeongbuk (KR)**
• **Kim, Dae-Hyun**
  **Gyeonggi-do (KR)**

(74) Representative: **Zimmer, Franz-Josef**
  **Grünecker, Kinkeldey,**
  **Stockmair & Schwanhäusser**
  **Anwaltssozietät**
  **Maximilianstrasse 58**
  **80538 München (DE)**

(54) **TRANSMITTING APPARATUS AND METHOD IN AN ORTHOGONAL FREQUENCY DIVISION MULTIPLEXING SYSTEM**

(57)    A transmitting apparatus and method in an OFDM system are provided. In the transmitting apparatus, a channel information receiver receives channel information. A rate allocator calculates a variable data rate. A scheduler allocates channel resources according to the channel information and the variable data rate.

FIG.1

EP 1 816 819 A2

**Description**

**PRIORITY**

This application claims priority under 35 U.S.C. § 119 to an application entitled "Transmitting Apparatus and Method in an Orthogonal Frequency Division Multiplexing System" filed in the Korean Intellectual Property Office on February 6, 2006 and assigned Serial No. 2006-10959, the contents of which are incorporated herein by reference.

**BACKGROUND OF THE INVENTION**

1. Field of the Invention

The present invention relates generally to a transmitting apparatus and method in an Orthogonal Frequency Division Multiplexing (OFDM) system, and in particular, to an apparatus and method for reducing transmission power by changing a data rate according to a channel status such that an average data rate for a predetermined period of time is equal to a required data rate.

2. Description of the Related Art

Recently having gained prominence in high-speed data transmission over wired/wireless channels, Orthogonal Frequency Division Multiplexing (OFDM) or Orthogonal Frequency Division Multiple Access (OFDMA) is a special case of MCM (Multi-Carrier Modulation). In OFDM or OFDMA systems, a serial symbol sequence is converted to parallel symbol sequences and modulated to mutually orthogonal sub-carriers or sub-channels, prior to transmission.

OFDM has been exploited in the wide field of digital data communications such as Digital Audio Broadcasting (DAB), digital television broadcasting, Wireless Local Area Network (WLAN), Wireless Asynchronous Transfer Mode (WATM), and Broadband Wireless Access (BWA). Although hardware complexity was an obstacle to the widespread use of OFDM, recent advances in digital signal processing technology including Fast Fourier Transform (FFT) and Inverse Fast Fourier Transform (IFFT) have enabled OFDM implementation.

OFDM, similar to Frequency Division Multiplexing (FDM), boasts optimum transmission efficiency in high-speed data transmission because OFDM systems can transmit data on sub-carriers, maintaining orthogonality among them. Efficient frequency use attributed to overlapping frequency spectrums and robustness against frequency selective fading and multi-path fading further increase the transmission efficiency in high-speed data transmission.

OFDM reduces the effects of Inter-Symbol Interference (ISI) through the use of guard intervals and enables design of a simple equalizer hardware structure. Furthermore, OFDM is robust against impulsive noise.

OFDM systems pursue optimal bit allocation and sub-channel allocation in terms of minimizing transmission power, while meeting a required data rate. Many techniques have been proposed to serve this purpose.

Due to limits on the average data rate of each user and the total number of sub-channels, as the difference in average channel gain between users increases, average transmission power increases. Because the transmission power increases exponentially with the number of allocated bits and linearly increases with the number of sub-channels, the transmission power can be minimized by increasing the number of sub-channels and decreasing the number of allocated bits in proportional to the average channel gain to meet a required data rate. However, since the total number of sub-channels is limited, which implies each user is allocated a limited number of sub-channels, the number of allocated bits must be increased in order to meet the required data rate, resulting in a great increase in transmission power.

Conventionally, the OFDM system allocates sub-channels and bits in the manner that minimizes transmission power in order to send data at a required data rate according to time-variant channel status. Therefore, the transmission power must be increased in order to meet the required data rate in a poor channel environment or in case of a shortage of resources.

**SUMMARY OF THE INVENTION**

Accordingly, there exists a need for developing an apparatus and method for reducing transmission power by adaptively changing a data rate according to a channel status such that an average data rate for a predetermined period of time is equal to a required data rate.

An aspect of the present invention is to substantially solve at least the above problems and/or disadvantages and to provide at least the advantages below. Accordingly, an aspect of the present invention is to provide a transmitting apparatus and method in an OFDM system.

Another aspect of the present invention is to provide an apparatus and method for calculating a variable data rate according to a channel status and sending data at the variable data rate in an OFDM system.

A further aspect of the present invention is to provide an apparatus and method for calculating a variable data rate according to a channel status, which equals an average data rate over a predetermined period of time to a required data rate, and sending data at the variable data rate in an OFDM system.

Still another aspect of the present invention is to provide a transmitting apparatus and method for adaptively allocating channel resources according to a variable data rate in an OFDM system.

The above aspects are achieved by providing a transmitting apparatus and method in an OFDM system.

According to one aspect of the preset invention, in a transmitter for an OFDM system, a channel information receiver receives channel information. A rate allocator calculates a variable data rate. A scheduler allocates channel resources according to the channel information and the variable data rate.

According to another aspect of the present invention, in a transmission method for an OFDM system, channel information is received and a variable data rate is calculated using the channel information and a stored previous data rate. Channel resources are allocated according to the variable data rate.

## BRIEF DESCRIPTION OF THE DRAWINGS

The above and other objects, features and advantages of the present invention will become more apparent from the following detailed description when taken in conjunction with the accompanying drawings in which:

FIG. 1 is a block diagram of a transmitter in an OFDM system according to the present invention; and

FIG. 2 is a flowchart illustrating a transmission operation in the OFDM system according to the present invention.

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention provides an apparatus and method for reducing transmission power by changing a data rate according to a channel status such that an average data rate for a predetermined period of time is equal to a required data rate.

An OFDM system uses a variety of modulation schemes such as an Mary Quadrature Amplitude Modulation (QAM) (e.g. 4QAM, 16QAM or 64QAM). When b bits per symbol are sent on an $n^{th}$ sub-channel to user k, reception power $f_k(b)$ that meets a required Bit Error Rate (BER) is determined by Equation (1)

$$f_k(b) = \frac{N_o}{3}\left[ Q^{-1}\left( \frac{BER}{4} \right) \right]^2 \left( 2^b - 1 \right) \qquad \ldots\ldots(1)$$

where $N_o$ denotes noise power.

Transmit power to be allocated to the $n^{th}$ sub-channel in an $i^{th}$ time slot for user k in order to meet a required data rate is computed by Equation (2)

$$P_{k,n}(i) = \frac{f_k\big(b_{k,n}(i)\big)}{a_{k,n}^2(i)} \qquad \ldots\ldots(2)$$

where $b_{k,n}(i)$ denotes the number of bits per symbol allocated to the $n^{th}$ sub-channel in the $i^{th}$ time slot for user k, and $a_{k,n}(i)$ denotes a channel gain between Mobile Station (MS) k and a Base Station (BS) in the $n^{th}$ sub-channel in the $i^{th}$ time slot.

Since each sub-channel is not shared among a plurality of users to prevent mutual interference, an indicator $\rho_{k,n}(i)$ indicating whether a sub-channel is allocated or not is expressed as Equation (3)

$$\rho_{k,n} = \begin{cases} 1, & \text{if } b_{k,n} \neq 0 \\ 0, & \text{if } b_{k,n} = 0 \end{cases}$$

$$\ldots \ldots (3)$$

Thus $\rho_{k,n}(i)$ must satisfy $\sum_{k=1}^{K} \rho_{k,n}(i) = 1$ and total transmit power $P_T(i)$ is given as Equation (4)

$$P_T(i) = \sum_{k=1}^{K} \sum_{n=1}^{N} P_{k,n}(i) = \sum_{k=1}^{K} \sum_{n=1}^{N} \frac{f_k(b_{k,n}(i))}{a_{k,n}^2(i)} \rho_{k,n}(i)$$

$$\ldots \ldots (4)$$

Due to the limit of the total number of sub-channel, as expressed by Equation (5)

$$\sum_{k=1}^{K} \sum_{n=1}^{N} \rho_{k,n}(i) = N$$

$$\ldots \ldots (5)$$

the total number of bits allocated to the $i^{th}$ time slot must satisfy the following variable data rate condition of Equation (6)

$$\sum_{n=1}^{N} b_{k,n}(i)\rho_{k,n}(i) = C_k(i)$$

$$\ldots \ldots (6)$$

and the average of the variable data rate $C_k(i)$ must satisfy a given data rate $R_k$, as expressed by Equation (7)

$$E[C_k(i)] = R_k$$

$$\ldots \ldots (7)$$

However, it is difficult to satisfy Equation (7) in real time. Assuming that the channel is flat, Equation (7) is expressed as Equation (8)

$$E[C_k(i)] \approx \overline{C}_k(i) = \left(1 - \frac{1}{T}\right)\overline{C}_k(i-1) + \frac{1}{T}C_k(i)$$

$$\ldots \ldots (8)$$

In accordance with the present invention, data is sent at a variable data rate according to a channel status such that an average data rate for a predetermined period of time meets a required data rate. Thus it can be said that the required data rate is eventually satisfied. The transmit power of the ith time slot for user k is given as Equation (9)

$$p_k(i) = \frac{f_k(b_k(i))}{a_k^2(i)} n_k(i)$$

$$\ldots \ldots (9)$$

where $a_k(i)$ denotes the average channel gain of the ith time slot for user k, $n_k(i)$ denotes the number of sub-channels allocated to user k in the ith time slot, and $b_k(i)$ denotes the average number of bits per symbol in each sub-channel allocated to user k in the ith time slot.

Equations (4), (5) and (6) are then expressed as Equations (10), (11) and (12), respectively.

$$P_T(i) = \sum_{k=1}^{K} P_k = \sum_{k=1}^{K} \frac{f_k(b_k(i))}{a_k^2(i)} n_k(i)$$

$$\ldots \ldots (10)$$

$$\sum_{k=1}^{K} n_k(i) = N$$

$$\ldots \ldots (11)$$

$$b_k(i) n_k(i) = C_k(i)$$

$$\ldots \ldots (12)$$

Therefore, the present invention seeks to calculate the number of sub-channels $n_k(i)$ and a variable rate $C_K(i)$ which minimize Equation (10), while satisfying Equations (8), (11) and (12).

According to Equations (10) and (12), the total transmit power $P_T(i)$ is computed by Equation (13)

$$P_T(i) = \sum_{k=1}^{K} \frac{n_k(i)}{a_k^2(i)} f_k\left(\frac{C_k(i)}{n_k(i)}\right)$$

$$\ldots \ldots (13)$$

where the number of sub-channels $n_K \in \{0, 1, ..., N\}$ and the variable data rate $C_K(i)$ is an integer larger than 0 ($C_K(i)>0$).

Yet, it is difficult to calculate the variable data rate that meets Equation (7), while performing channel estimation in real time. Assuming $n_k(i)$ and $C_k(i)$ are real numbers and a margin is given to the restrictive condition, Equation (7) is then expressed in Equation (14) according to Equation (8).

$$\left| R_k - \overline{C}_k(i) \right| \le \varepsilon_k$$

$$\ldots \ldots (14)$$

where $\varepsilon_k$ is any very small positive real number.

Therefore, $n_k(i)$ and $C_k(i)$ that minimize Equation (10) under the conditions described by Equations (11) and (14) are calculated.

$C_k(i)$ is calculated by Equation (7). While $C_k(i)$ meeting Equation (7) can be $C_k(i)=R_k$ and $C_k(i)=\dfrac{a_k(i)}{E[a_k(i)]}R_k$, in the case where the required data rate is fixed as with the conventional technology, $C_k(i)=R_k$, and it is difficult to calculate $E[a_k(i)]$ in $C_k(i)=\dfrac{a_k(i)}{E[a_k(i)]}R_k$. In this context using Equation (14), $C_k(i)$ is calculated by Equation (15)

$$C_k(i) = round\left(\frac{a_k(i)}{\overline{a}_k(i)}R_k + \mu_k\left(R_k - \overline{C}_k(i-1)\right)\right)$$

$$\ldots\ldots(15)$$

where $\overline{a}_k(i) = \left(1 - \frac{1}{T}\right)\overline{a}_k(i-1) + \frac{1}{T}a_k(i)$, $\overline{C}_k(i) = \left(1 - \frac{1}{T}\right)\overline{C}_k(i-1) + \frac{1}{T}C_k(i)$, T is a predetermined period of time during which the average data rate is calculated, $\mu_k$ is a weight factor constant, and round(R) is a function of rounding r.

Now a description will be made below of a transmitter in an OFDM system according to the present invention.

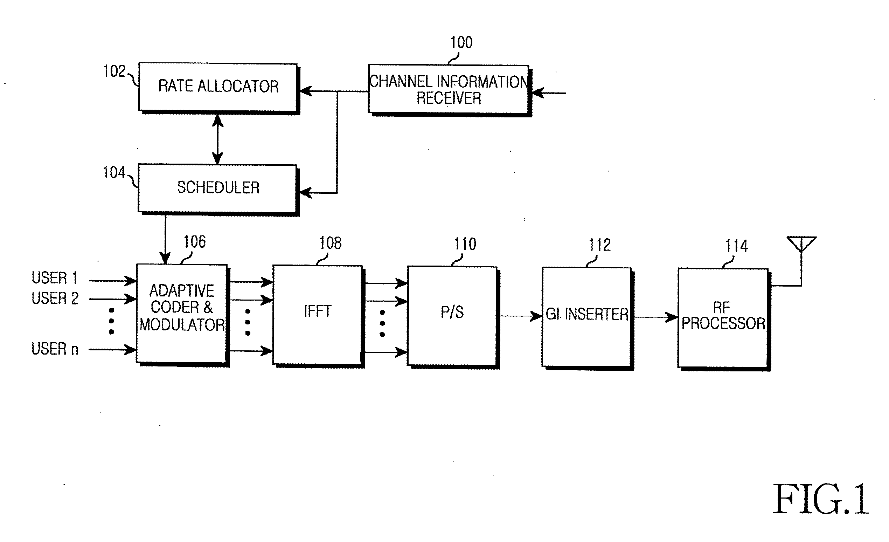

FIG. 1 is a block diagram of a transmitter in an OFDM system according to the present invention.

Referring to FIG. 1, the transmitter includes a channel information receiver 100, a rate allocator 102, a scheduler 104, an adaptive coder and modulator 106, an IFFT processor 108, a Parallel-to-Serial (P/S) converter 110, a Guard Interval (GI) inserter 112, and a Radio Frequency (RF) processor 114.

The channel information receiver 100 receives channel information from MSs. The rate allocator 102 calculates a data rate such that the average data rate of a predetermined period of time meets a required data rate using the received channel information and stored channel information according to Equation (15). Meanwhile, if the scheduler 104 allocates no sub-channels, the rate allocator 102 sets the data rate to 0 and stores it.

The scheduler 104 allocates sub-channels using the allocated data rate and the channel information so as to minimize transmission power, thereby determining power and a modulation/demodulation level. If sub-channel allocation is unavailable, for example, if there are no available sub-channels, the scheduler 104 notifies the rate allocator 102 of no sub-channel allocation.

The adaptive coder and modulator 106 channel-encodes information data destined for each user and modulates the information data in a modulation scheme in accordance with the resource allocation of the scheduler 104. The IFFT processor 108 IFFT-processes the modulated data. The P/S converter 110 serializes the parallel IFFT signals. The GI inserter 112 inserts a GI in the serial signal in order to reduce ISI between the sub-channels of the IFFT signal. The RF processor 118 sends the GI-including channel data through an antenna on a radio channel.

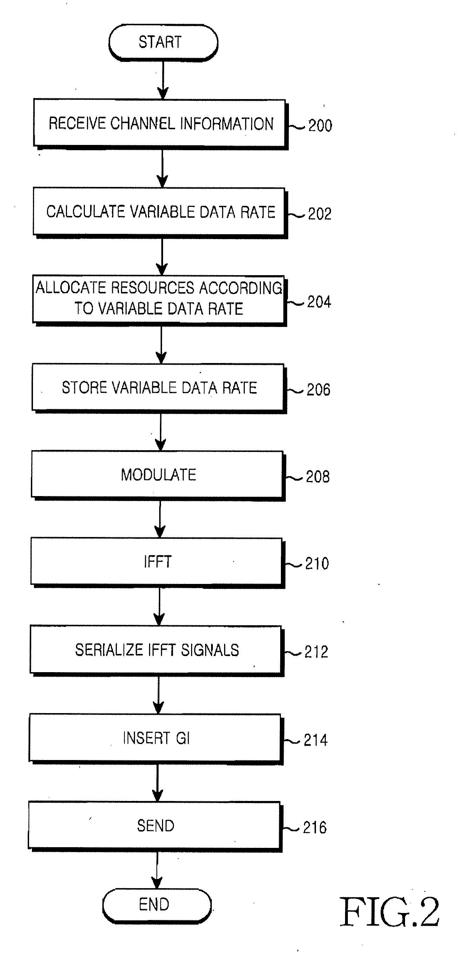

FIG. 2 is a flowchart illustrating a transmission operation in the OFDM system according to the present invention.

Referring to FIG. 2, the channel information receiver 100 receives the channel information in step 200. The rate allocator 102 calculates a variable data rate using the received channel information and stored previous data rates according to Equation (15) in step 202.

In step 204, the scheduler 104 allocates channel sources according to the variable data rate. In the channel resource allocation, the scheduler 104 selects a user that minimizes the increase of the total transmission power each time a sub-channel is added, and adds one sub-channel for the user.

In step 206, the scheduler stores the variable data rate to be used in calculating the next variable data rate. Specifically, when a sub-channel is allocated, the variable data rate is stored, while when no sub-channels are allocated, the variable data rate is stored as 0.

The adaptive coder and modulator 106 channel-encodes and modulates information data for each user according to the channel resource allocation of the scheduler 104 in step 208. The IFFT processor 108 IFFT-processes the modulated data in step 210 and the P/S converter 110 serializes the parallel IFFT signals in step 212. In step 214, the GI inserter 112 inserts a GI in the serial signal. The RF processor 118 sends the GI-including data through the antenna on a radio channel in step 216.

In accordance with the present invention as described above, a variable data rate is calculated such that the average data rate of a predetermined period of time meets a required data rate and data is sent at the variable data rate in an OFDM system. Hence, transmission power is saved, meeting the required data rate.

While the invention has been shown and described with reference to certain preferred embodiments thereof, it will be understood by those skilled in the art that various changes in form and details may be made therein without departing from the spirit and scope of the invention as defined by the appended claims.

**Claims**

1.  A transmitter in an Orthogonal Frequency Division Multiplexing (OFDM) system, comprising:

    a channel information receiver for receiving channel information;
    a rate allocator for calculating a variable data rate using the channel information; and
    a scheduler for allocating channel resources according to the channel information and the variable data rate.

2.  The transmitter of claim 1, wherein the rate allocator calculates the variable data rate using the channel information and a previous data rate.

3.  The transmitter of claim 2, wherein the rate allocator calculates the variable rate by

$$C_k(i) = round\left( \frac{a_k(i)}{\overline{a}_k(i)} R_k + \mu_k \left( R_k - \overline{C}_k(i-1) \right) \right)$$

where $C_k(i)$ is the variable data rate for an $i^{th}$ time slot for a $k^{th}$ user, $a_k(i)$ is a channel gain between the $k^{th}$ user and a base station in the $i^{th}$ time slot, $\overline{a}_k(i) = \left( 1 - \frac{1}{T} \right) \overline{a}_k(i-1) + \frac{1}{T} a_k(i),$  $\overline{C}_k(i) = \left( 1 - \frac{1}{T} \right) \overline{C}_k(i-1) + \frac{1}{T} C_k(i),$ T is a period of time during which the average data rate is calculated, $\mu_k$ is a weight factor constant, and round(R) is a function of rounding r.

4.  The transmitter of claim 1, wherein the scheduler allocates the sub-channels using the channel information and the variable data rate so that transmission power is minimized.

5.  The transmitter of claim 4, wherein the scheduler selects a user that minimizes an increase in total transmission power each time a sub-channel is added and adds one sub-channel for the user according to

$$P_T(i) = \sum_{k=1}^{K} \frac{n_k(i)}{a_k^2(i)} f_k\left( \frac{C_k(i)}{n_k(i)} \right)$$

where $P_T(i)$ is a total transmission power of an $i^{th}$ time slot for a period of time T, $n_k(i)$ is a number of sub-channels allocated to a $k^{th}$ user in the $i^{th}$ time slot, in which $n_k \in \{0, 1, ..., N\}$, and $C_k(i)$ is a variable data rate of the $i^{th}$ time slot for the $k^{th}$ user, being an integer greater than 0 ($C_k(i)>0$).

6.  The transmitter of claim 4, wherein the scheduler allocates the sub-channels and, if a sub-channel is allocated, the scheduler stores the variable data rate as a previous data rate, and, if no sub-channel is allocated, the scheduler stores 0 as the previous data rate.

7. A transmission method in an Orthogonal Frequency Division Multiplexing (OFDM) system, comprising the steps of:

   receiving channel information;
   calculating a variable data rate using the channel information and a stored previous data rate; and
   allocating channel resources according to the variable data rate.

8. The transmission method of claim 7, further comprising:

   if a sub-channel is allocated as the channel resources storing the variable data rate as a previous data rate; and
   if no sub-channel is allocated as the channel resources storing 0 as the previous data rate.

9. The transmission method of claim 7, wherein the variable data rate calculation step comprises calculating the variable rate by

$$C_k(i) = round\left(\frac{a_k(i)}{\overline{a}_k(i)}R_k + \mu_k\left(R_k - \overline{C}_k(i-1)\right)\right)$$

where $C_k(i)$ is the variable data rate for an $i^{th}$ time slot for a $k^{th}$ user, $a_k(i)$ is a channel gain between the $k^{th}$ user and a base station in the $i^{th}$ time slot, $\overline{a}_k(i) = \left(1 - \frac{1}{T}\right)\overline{a}_k(i-1) + \frac{1}{T}a_k(i)$, $\overline{C}_k(i) = \left(1 - \frac{1}{T}\right)\overline{C}_k(i-1) + \frac{1}{T}C_k(i)$,

T is a period of time of which the average data rate is calculated, $\mu_k$ is a weight factor constant, and round(R) is a function of rounding r.

10. The transmission method of claim 7, wherein the channel resources allocation step comprises allocating sub-channels using the channel information and the variable data rate so that transmission power is minimized.

11. The transmission method of claim 10, wherein the channel resources allocation step comprises selecting a user that minimizes an increase in total transmission power each time a sub-channel is added and adds one sub-channel for the user according to

$$P_T(i) = \sum_{k=1}^{K} \frac{n_k(i)}{a_k^2(i)} f_k\left(\frac{C_k(i)}{n_k(i)}\right)$$

where $P_T(i)$ is a total transmission power of an $i^{th}$ time slot for a period of time T, $n_k(i)$ is a number of sub-channels allocated to a $k^{th}$ user in the $i^{th}$ time slot, in which $n_k \in \{0, 1, ..., N\}$, and $C_k(i)$ is a variable data rate of the $i^{th}$ time slot for the $k^{th}$ user, being an integer greater than 0 ($C_k(i)>0$).

12. A transmitter in a wireless communication system, comprising:

   a channel information receiver for receiving channel information;
   a rate allocator for calculating a variable data rate using the channel information and a previous data rate; and
   a scheduler for allocating channel resources according to the variable data rate.

13. The transmitter of claim 12, wherein the rate allocator calculates the variable rate by

$$C_k(i) = round\left(\frac{a_k(i)}{\bar{a}_k(i)}R_k + \mu_k\left(R_k - \bar{C}_k(i-1)\right)\right)$$

where $C_k(i)$ is the variable data rate for an $i^{th}$ time slot for a $k^{th}$ user, $a_k(i)$ is a channel gain between the $k^{th}$ user and a base station in the $i^{th}$ time slot, $\bar{a}_k(i) = \left(1 - \frac{1}{T}\right)\bar{a}_k(i-1) + \frac{1}{T}a_k(i)$, $\bar{C}_k(i) = \left(1 - \frac{1}{T}\right)\bar{C}_k(i-1) + \frac{1}{T}C_k(i)$,

T is a period of time during which the average data rate is calculated, $\mu_k$ is a weight factor constant, and round(R) is a function of rounding r.

14. The transmitter of claim 12, wherein the scheduler allocates the sub-channels using the channel information and the variable data rate so that transmission power is minimized.

15. The transmitter of claim 14, wherein the scheduler selects a user that minimizes an increase in total transmission power each time a sub-channel is added and adds one sub-channel for the user according to

$$P_T(i) = \sum_{k=1}^{K} \frac{n_k(i)}{a_k^2(i)} f_k\left(\frac{C_k(i)}{n_k(i)}\right)$$

where $P_T(i)$ is a total transmission power of an $i^{th}$ time slot for a period of time T, $n_k(i)$ is a number of sub-channels allocated to a $k^{th}$ user in the $i^{th}$ time slot, in which $n_k \in \{0, 1, ..., N\}$, and $C_k(i)$ is a variable data rate of the $i^{th}$ time slot for the $k^{th}$ user, being an integer greater than 0 ($C_k(i)>0$).

16. A transmission method in a wireless communication system, comprising the steps of:

    receiving channel information;
    calculating a variable data rate using the channel information and a previous data rate; and
    allocating channel resources according to the variable data rate.

17. The transmission method of claim 16, further comprising:

    storing the variable data rate as a previous data rate if a sub-channel is allocated as the channel resources; and
    storing 0 as the previous data rate if no sub-channel is allocated as the channel resources.

18. The transmission method of claim 16, wherein the variable data rate calculation step comprises calculating the variable rate by

$$C_k(i) = round\left(\frac{a_k(i)}{\bar{a}_k(i)}R_k + \mu_k\left(R_k - \bar{C}_k(i-1)\right)\right)$$

where $C_k(i)$ is the variable data rate for an $i^{th}$ time slot for a $k^{th}$ user, $a_k(i)$ is a channel gain between the $k^{th}$ user and a base station in the $i^{th}$ time slot, $\bar{a}_k(i) = \left(1 - \frac{1}{T}\right)\bar{a}_k(i-1) + \frac{1}{T}a_k(i)$, $\bar{C}_k(i) = \left(1 - \frac{1}{T}\right)\bar{C}_k(i-1) + \frac{1}{T}C_k(i)$,

T is a period of time of which the average data rate is calculated, $\mu_k$ is a weight factor constant, and round(R) is a function of rounding r.

**19.** The transmission method of claim 16, wherein the channel resources allocation step comprises allocating sub-channels using the channel information and the variable data rate so that transmission power is minimized.

**20.** The transmission method of claim 19, wherein the channel resources allocation step comprises selecting a user that minimizes an increase in total transmission power each time a sub-channel is added and adds one sub-channel for the user according to

$$P_T(i) = \sum_{k=1}^{K} \frac{n_k(i)}{\alpha_k^2(i)} f_k\left(\frac{C_k(i)}{n_k(i)}\right)$$

where $P_T(i)$ is a total transmission power of an $i^{th}$ time slot for a period of time T, $n_k(i)$ is a number of sub-channels allocated to a $k^{th}$ user in the $i^{th}$ time slot, in which $n_k \in \{0, 1, ..., N\}$, and $C_k(i)$ is a variable data rate of the $i^{th}$ time slot for the $k^{th}$ user, being an integer greater than 0 ($C_k(i) > 0$).

EP 1 816 819 A2

FIG.1

11

START

RECEIVE CHANNEL INFORMATION ～200

CALCULATE VARIABLE DATA RATE ～202

ALLOCATE RESOURCES ACCORDING TO VARIABLE DATA RATE ～204

STORE VARIABLE DATA RATE ～206

MODULATE ～208

IFFT ～210

SERIALIZE IFFT SIGNALS ～212

INSERT GI ～214

SEND ～216

END

FIG.2